# EUROPÄISCHE PATENTSCHRIFT

(11) **EP 1 726 472 B1**
(45) Veröffentlichungstag und Bekanntmachung des Hinweises auf die Patenterteilung: **14.01.2009**
(21) Anmeldenummer: 06114406.9
(22) Anmeldetag: 23.05.2006
(51) Int. Cl.: B60L 5/22

(54) **Kraftmesseinrichtung und Verfahren zur Bestimmung einer Kontaktkraft**
Force measuring device and method for determining a contact force
Dispositif de mesure d'une force et méthode pour la détermination d'une force de contact

(30) Priorität: 25.05.2005 DE 102005024202
(43) Veröffentlichungstag der Anmeldung: 29.11.2006
(73) Patentinhaber: SIEMENS AKTIENGESELLSCHAFT, 80333 München (DE)
(72) Erfinder: Bosselmann, Thomas, 91080, Marloffstein (DE); Theune, Nils-Michael, 90522, Oberasbach (DE)

(56) Entgegenhaltungen:
- DE-A1- 10 249 896
- JP-A- 11 136 804
- PATENT ABSTRACTS OF JAPAN Bd. 1999, Nr. 10, 31. August 1999 (1999-08-31) & JP 11 136804 A (CENTRAL JAPAN RAILWAY CO; TOYO ELECTRIC MFG CO LTD), 21. Mai 1999 (1999-05-21)

## Beschreibung

Die Erfindung bezieht sich auf eine Kraftmesseinrichtung und ein Verfahren zur Bestimmung einer Kontaktkraft zwischen einem Stromabnehmerendhorn eines Schienentriebfahrzeuges und einem Fahrdraht einer Oberleitung. Eine entsprechende Einrichtung und ein entsprechendes Verfahren zur Messung der Kontaktkraft zwischen einem Stromabnehmer und einem Fahrdraht, der zur elektrischen Energieversorgung eines Schienentriebfahrzeuges bestimmt ist, gehen aus der DE 102 49 896 A1 hervor.

Ein Schienentriebfahrzeug wird über einen elektrischen (Strom-)Leiter in Form eines Fahrdrahtes als Teil einer Oberleitung mit elektrischer Energie versorgt. Die Energie gelangt mittels eines mit dem Fahrdraht in mechanischem Schleifkontakt stehenden Stromabnehmers von der Oberleitung über eine Schleifleiste des Stromabnehmers zum Schienentriebfahrzeug. Bei immer höher werdenden Endgeschwindigkeiten moderner Schienentriebfahrzeuge gewinnt die zuverlässige Interaktion zwischen Stromabnehmer und Oberleitung immer mehr an Bedeutung. So kann die Anpresskraft des Stromabnehmers an den Fahrdraht der Oberleitung unangemessen sein. Bei überhöhten Anpresskräften werden der Fahrdraht und auch die Schleifleiste einem übermäßigen Verschleiß ausgesetzt. Bei zu niedrigen Kontaktkräften kann es im Fahrbetrieb auch zu Kontaktverlusten kommen, die Lichtbögen zwischen Fahrdraht und Schleifleiste hervorrufen können.

Neben den Anpresskräften des Stromabnehmers spielt für die maximal erreichbare Endgeschwindigkeit auch die exakte Anordnung der Oberleitung eine bestimmende Rolle. Der Fahrdraht sollte dabei möglichst wellenfrei und gleichmäßig verlaufen. Besonders bei Weichen können die größten Kontaktkräfte zwischen Fahrdraht und Stromabnehmer auftreten. Weichen weisen neben der ursprünglichen Stamm-Oberleitung zusätzlich mindestens eine Zweig-Oberleitung auf. Da jeder Oberleitung ein Fahrdraht zugeordnet ist, sind vor der Weiche konstruktionsbedingt Stamm-Fahrdraht und Zweig-Fahrdraht nebeneinander angeordnet. Fährt ein Schienentriebfahrzeug mit seinem Stromabnehmer auf eine derartig Weiche zu, so berührt der Stromabnehmer kurzzeitig beide Fahrdrähte gleichzeitig. Dabei läuft entweder der Stamm-Fahrdraht oder der Zweig-Fahrdraht auf den Stromabnehmer seitlich auf. Infolge des dynamischen Anhubs besteht die Gefahr des Anschlagens an ein seitliches Endhorn des Stromabnehmers, welcher zu einem Stromabnehmerausfall führen kann.

Gemäß DE 102 49 896 A1 sind ein Verfahren und eine Einrichtung zur Messung der Kontaktkraft, die von einem Stromabnehmer auf einen Fahrdraht ausgeübt wird, angegeben. Die vom Stromabnehmer auf den Fahrdraht wirkenden Kräfte werden hierbei mit Hilfe von Faser-Bragg-Gitter-Sensoren (FBG-Sensoren) gemessen, die unmittelbar an der Schleifleiste oder an einem zwischen Schleifleiste und Wippe des Stromabnehmers angeordneten Deformationselement befestigt werden. Bei Krafteinwirkung der Schleifleiste verformen sich die FBG-Sensoren bzw. verformt sich das Deformationselement und somit auch die entsprechend an diesem angeordneten FBG-Sensoren. Die Verformung des optischen Sensors liefert dabei Informationen über das Ausmaß der Krafteinwirkung des Stromabnehmers auf den Fahrdraht. Seitlich auf die Endhörner des Stromabnehmers wirkende Kontaktkräfte, die insbesondere im Bereich von Weichen auf ein Anschlagen eines weiteren Fahrdrahtes zurückzuführen sind, können jedoch nicht genau gemessen werden.

Der Erfindung liegt nun die Aufgabe zugrunde, eine Einrichtung und ein Verfahren anzugeben, die eine exaktere Bestimmung von auf das jeweilige Endhorn wirkenden Kontaktkräften ermöglichen.

Zur Lösung der sich auf eine Kraftmesseinrichtung beziehende Aufgabe sind die Merkmale des Patentanspruchs 1 vorgesehen.

Bei der erfindungsgemäßen Kraftmesseinrichtung handelt es sich um eine Kraftmesseinrichtung zur Bestimmung einer Kontaktkraft zwischen einem Stromabnehmerendhorn eines Schienentriebfahrzeuges und einem Fahrdraht einer Oberleitung, welche Einrichtung folgende Teile umfasst, nämlich
- mindestens einen am Stromabnehmerendhorn angeordneten, als optischer Dehnungssensor ausgebildeten Faser-Bragg-Gitter-Sensor, wobei
   - das Stromabnehmerendhorn unter Einwirkung der Kontaktkraft biegbar ist und
   - der mindestens eine Faser-Bragg-Gitter-Sensor mit der kontaktkraftbedingten Biegung des Stromabnehmerendhorns verformbar ist,
- Einspeisemittel zur Einspeisung eines Lichtsignals mit einem vorbestimmten Wellenlängengehalt in den mindestens einen eine Schwerpunktswellenlänge aufweisenden Faser-Bragg-Gitter-Sensor, wobei die Verformung des mindestens einen Faser-Bragg-Gitter-Sensors mit einer Änderung der Schwerpunktswellenlänge verbunden ist,
und
- Auswertemittel zur Bestimmung eines Messwertes für die Kontaktkraft aus einem vom mindestens einen Faser-Bragg-Gitter-Sensor herkommenden Lichtsignal, wobei mit der verformungsbedingten Änderung der Schwerpunktswellenlänge des Faser-Bragg-Gitter-Sensors eine Änderung des Wellenlängengehalts des vom mindestens einen Faser-Bragg-Gitter-Sensor herkommenden Lichtsignals verbunden ist.

Durch geeignetes Anbringen mindestens eines Faser-Bragg-Gitter-Sensors als Dehnungssensor an ein Endhorn des Stromabnehmers lassen sich während des Fahrbetriebes die auf das Endhorn durch den Fahrdraht einwirkenden Kontaktkräfte genau quantifizieren. Dabei ist für den mindestens einen Faser-Bragg-Gitter-Sensor keine elektrische Energieversorgung auf Hochspannungspotential nötig. Vielmehr können die Energieversorgung und das Signalauslesen im Innern des Schienentriebfahrzeugs und damit auf Erdpotential erfolgen. Der Stromabnehmer, an dem der Faser-Bragg-Gitter-Sensor angeordnet ist, kann also ohne weiteres während des Messvorgangs unter elektrischer (Hoch)Spannung stehen. Die mit der Kraftmesseinrichtung gemäß der Erfindung gewonnenen Messwerte können insbesondere als Grundlage für eine Fahrdraht-Optimierung verwendet werden, um beispielsweise im Weichenbereich eine erhöhte Durchfahrtsgeschwindigkeiten des Schienentriebfahrzeuges zu ermöglichen. Zusätzlich kann die Abnutzung des Stromabnehmers und im Besonderen die des Fahrdrahtes im kritischen Weichenbereich optimiert werden. Somit können Instandsetzungsintervalle verlängert und optimiert werden.

Mittels der Einrichtung gemäß der Erfindung lässt sich des Weiteren ein preiswertes Online-Monitoring-System aufbauen, welches auf jedes Schienentriebfahrzeug montiert werden kann. Einschränkungen hinsichtlich der Verfügbarkeit durch Aufladung einer Batterie treten bei diesem System dann nicht auf. Somit können die EU-Richtlinien zur Interoperabilität von Bahnsystemen leicht erfüllt werden.

Vorteilhafte Ausgestaltungen der Kraftmesseinrichtung gemäß der Erfindung ergeben sich aus den von Anspruch 1 abhängigen Ansprüchen.

Es ist insbesondere vorteilhaft, wenn weitere am Stromabnehmerendhorn angeordnete, als optische Dehnungssensoren ausgebildete FBG-Sensoren vorgesehen sind. Dabei wird ausgenutzt, dass FBG-Sensoren sich durch ihre besondere Multiplexfähigkeit auszeichnen. Zur besseren Unterscheidbarkeit können die in einem Lichtwellenleiter angeordneten FBG-Sensoren vorzugsweise jeweils eine voneinander verschiedene Schwerpunktswellenlänge aufweisen. Die Schwerpunktswellenlängen von mehreren FBG-Sensoren eines Lichtwellenleiters müssen jedoch gezwungenermaßen nicht unterschiedlich sein, wenn zur Unterscheidung der Antwortsignale verschiedener FBG-Sensoren beispielsweise ein OTDR (Optical Time Domain Reflectometer) verwendet wird. Durch eine Verteilung mehrerer FBG-Sensoren an einem Endhorn ist mit den durch die kontaktkraftbedingte Biegung des Endhorns entsprechend gedehnten FBG-Sensoren eine Dehnungsverteilung bestimmbar, so dass die Kontaktkraft und die Position des Fahrdrahtes auf dem Endhorn ermittelbar ist.

Günstig ist, wenn mindestens zwei als optische Dehnungssensoren ausgebildete Faser-Bragg-Gitter-Sensoren mit voneinander verschiedener Wirkungsrichtung vorgesehen sind. Damit sind Kräfte, die mit beliebigen Kraftrichtungen auf das Endhorn wirken, ermittelbar.

Die das Verfahren betreffende Aufgabe wird erfindungsgemäß durch die Merkmale in Patentanspruch 4 gelöst.

Bei dem erfindungsgemäßen Verfahren handelt es sich um ein Verfahren zur Bestimmung einer Kontaktkraft zwischen einem Stromabnehmerendhorn eines Schienentriebfahrzeuges und einem Fahrdraht einer Oberleitung, bei welchem Verfahren
- mindestens ein als optischer Dehnungssensor ausgebildeter Faser-Bragg-Gitter-Sensor am Stromabnehmerendhorn angeordnet wird, wobei
   - das Stromabnehmerendhorn unter Einwirkung der Kontaktkraft gebogen wird und
   - der mindestens eine Faser-Bragg-Gitter-Sensor mit der kontaktkraftbedingten Biegung des Stromabnehmerendhorns verformt wird,
- ein Lichtsignal mit einem vorbestimmten Wellenlängengehalt in den mindestens einen eine Schwerpunktswellenlänge aufweisenden Faser-Bragg-Gitter-Sensor eingespeist wird, wobei sich mit der Verformung des mindestens einen Faser-Bragg-Gitter-Sensors die Schwerpunktswellenlänge ändert,
   und
- ein vom mindestens einen Faser-Bragg-Gitter-Sensor herkommendes Lichtsignal ausgewertet wird, wobei mit der verformungsbedingten Änderung der Schwerpunktswellenlänge des mindestens einen Faser-Bragg-Gitter-Sensors eine Änderung des Wellenlängengehalts des vom mindestens einen Faser-Bragg-Gitter-Sensor herkommenden Lichtsignals verbunden ist.

Beim erfindungsgemäßen Verfahren ergeben sich die vorstehend für die erfindungsgemäße Kraftmesseinrichtung erläuterten Vorteile.

Vorteilhafte Ausgestaltungen des Verfahrens gemäß der Erfindung ergeben sich aus den von Anspruch 4 abhängigen Ansprüchen.

Es ist insbesondere vorteilhaft, wenn weitere als optische Dehnungssensoren ausgebildete Faser-Bragg-Gitter-Sensoren am Stromabnehmerendhorn angeordnet werden. Durch eine Verteilung mehrerer FBG-Sensoren an einem Endhorn kann mit den durch die kontaktkraftbedingte Biegung des Endhorns entsprechend gedehnten FBG-Sensoren eine Dehnungsverteilung bestimmt werden, aus welcher auf die Kontaktkraft und auch auf die Position des Fahrdrahtes auf dem Endhorn geschlossen werden kann.

Günstig ist, wenn die Kontaktkraft in mindestens zwei voneinander verschiedene Wirkungsrichtungen erfasst wird. Damit können Kräfte, die mit beliebigen Kraftrichtungen auf das Endhorn wirken, ermittelt werden.

Bevorzugte, jedoch keinesfalls einschränkende Ausführungsbeispiele der Vorrichtung werden nunmehr anhand der Zeichnung näher erläutert. Zur Veranschaulichung ist die Zeichnung nicht maßstäblich ausgeführt und gewisse Merkmale sind schematisiert dargestellt. Im Einzelnen zeigen
- Figur 1: eine Kraftmesseinrichtung zur Bestimmung einer Kontaktkraft zwischen einem Stromabnehmerendhorn und einem Fahrdraht,
- Figur 2: eine Stromabnehmerendhorn mit kraftschlüssig angeordneten FBG-Sensoren und
- Figur 3: einen Abschnitt eines Stromabnehmerendhorns mit kraftschlüssig angeordneten FBG-Sensoren.

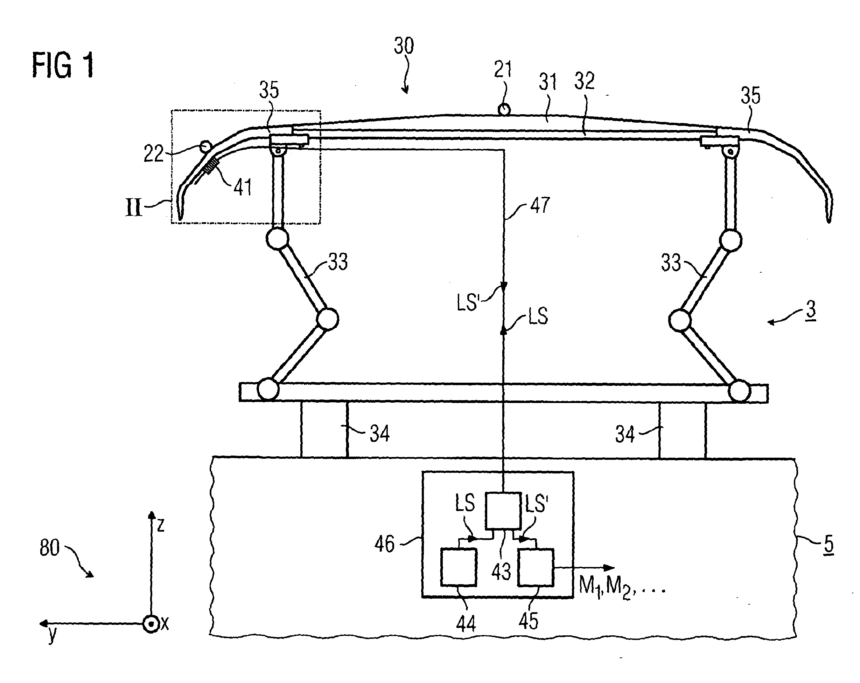

Einander entsprechende Teile sind in den Figuren 1 bis 3 mit denselben Bezugszeichen versehen.

In Figur 1 ist eine Kraftmesseinrichtung zur Bestimmung der Kontaktkraft zwischen einem Endhorn 35 eines Stromabnehmers 3 eines Schienentriebfahrzeugs 5 und einem Fahrdraht 22 dargestellt. Im Betrieb bewegt sich das Schienentriebfahrzeug 5 gemäß einem rechtwinkligen x-y-z-Koordinatensystems 80 in x-Richtung fort. Bei der hier abgebildeten Momentaufnahme befindet sich das Schienentriebfahrzeug 5 im Bereich einer Weiche, in welchem der Stromabnehmer 3 mit zwei Fahrdrähten 21 und 22 in Kontakt ist. So kann beispielsweise der Fahrdraht 21 einer Stamm-Oberleitung und der Fahrdraht 22 einer Zweig-Oberleitung zugeordnet sein. Das Schienentriebfahrzeug 5 bezieht somit seine Energie über beide Fahrdrähte 21 und 22.

Der konstruktive Aufbau des an sich bekannten Stromabnehmers 3 umfasst im Wesentlichen eine Schleifleiste 30, eine Wippe 33 sowie elektrische Isolatoren 34, die die zuvor genannten Komponenten des Stromabnehmers 3 gegenüber dem Schienentriebfahrzeug 5 elektrisch isolieren. Die Schleifleiste 30 enthält einen als Aluminiumprofil ausgebildeten Grundkörper 32, ein Schleifelement 31, das hier eine Carbonleiste ist, und an den seitlichen Enden jeweils ein Endhorn 35.

Zur Erfassung der Kontaktkraft zwischen dem Endhorn 35 und dem Fahrdraht 22 sind ein oder mehrere optisch abfragbare Faser-Bragg-Gitter-Sensoren 41 vorgesehen. Bei mehreren FBG-Sensoren 41 hat jeder einzelne Sensor 41 eine spezifische Schwerpunktswellenlänge - die so genannte Bragg-Wellenlänge, die sich insbesondere von derjenigen der übrigen Sensoren 41 unterscheidet. Die FBG-Sensoren 41 werden von einem Lichtsignal LS, das von einer breitbandigen Lichtquelle 44 erzeugt wird, abgefragt. Über einen Koppler 43 und einen Lichtwellenleiter 47 wird das Lichtsignal LS in die FBG-Sensoren 41 eingespeist. In jedem FBG-Sensor 41 wird von dem eingespeisten Lichtsignal LS ein Anteil mit der jeweiligen Schwerpunktswellenlänge als Teil-Reflex-Lichtsignal zurückreflektiert. Der übrige Anteil des Lichtsignals LS passiert dagegen den betreffenden FBG-Sensor 41 und trifft gegebenenfalls auf den nächsten FBG-Sensor 41. Am Koppler 43 steht dann ein von den FBG-Sensoren 41 zurückreflektiertes Lichtsignal LS' an, das sich aus den Teil-Reflex-Lichtsignalen der einzelnen FBG-Sensoren 41 zusammensetzt.

Die FBG-Sensoren 41 sind in der Regel sehr kompakt ausgestaltet. Einzelne Sensoren 41 haben typischerweise einen Durchmesser von ca. 200 µm und eine Länge von ca. 10 mm. Sie können damit an fast jedem Ort angebracht werden.

Bei Krafteinwirkung des Fahrdrahtes 22 auf das Endhorn 35, wird dieses insbesondere in der y-z-Ebene gebogen. Die FBG-Sensoren 41 sind dabei derart, insbesondere kraftschlüssig an dem Endhorn 35 angebracht, dass zumindest einer der FBG-Sensoren 41 durch die zur Kontaktkraft proportionale Biegung des Endhorns 35 verformt wird. Damit verändert sich die Schwerpunktswellenlänge des zumindest einen Sensors 41 und damit auch der Wellenlängengehalt (= das Wellenlängenspektrum) des vom betreffenden Sensor 41 reflektierten Teil-Reflex-Lichtsignals. Diese Veränderung im Wellenlängengehalt dient als Maß für die zu erfassende Kontaktkraft. Es ist aber auch ein Transmissionsbetrieb denkbar (in den Figuren nicht gezeigt). Hier muss im Gegensatz zum Reflexionsbetrieb das gesamte von der Lichtquelle 44 ausgesandte Wellenlängenspektrum auf fehlende Wellenlängenbereiche untersucht werden. Denn diese fehlenden Wellenlängenbereiche entsprechen den jeweiligen Schwerpunktswellenlängen der einzelnen Sensoren 41.

Das von den FBG-Sensoren 41 herkommende, in den Koppler 43 wieder eingespeiste Lichtsignal LS' wird vom Koppler 43 zu einer Auswerteeinheit 45 geleitet. Diese umfasst insbesondere einen optoelektrischen Wandler, einen Analog/Digital-Wandler und ein digitaler Signalprozessor. Der optoelektrische Wandler weist vorteilhafter Weise ein spektral selektives Element zur Selektion der einzelnen Teil-Reflex-Lichtsignale, beispielsweise in Gestalt eines Polychromators, und einen gegebenenfalls auch mehrteiligen Lichtempfänger auf. Zur Analyse des Lichtspektrums sind Gitter- oder Beugungsspektrometer denkbar. Im Anschluss an die optoelektronische Wandlung findet im Analog/Digital-Wandler eine Analog/Digital-Wandlung statt. Das digitalisierte Ausgangssignal des Analog/Digital-Wandlers wird dem digitalen Signalprozessor zugeführt, mittels welchem Messwerte M1, M2,... für die in den FBG-Sensoren 41 erfassten Kontaktkräfte ermittelt werden. Im Transmissionsbetrieb hingegen kann auf den Koppler 43 verzichtet werden. Hier wird an einem Ende des Lichtwellenleiters 47 das Lichtsignal LS mittels der Lichtquelle 44 eingekoppelt und am anderen Ende des Lichtwellenleiters 47 von einem optoelektrischen Wandler detektiert.

Die Lichtquelle 44, der Koppler 43 und die Auswerteeinheit 45 sind in einer Sende/Empfangseinheit 46 zusammengefasst, wobei die Lichtquelle 44 und der Koppler 43 als Einspeisemittel zur Einspeisung des Lichtsignals LS in die FBG-Sensoren 41 sowie die Auswerteeinheit 45 mit optoelektrischem Wandler, Analog/Digital-Wandler und digitalem Signalprozessor als Auswertemittel zur Bestimmung eines Messwertes M1, M2,... für die von den FBG-Sensoren 41 jeweils erfasste Kontaktkraft aufgefasst werden können. In einem anderen nicht gezeigten Ausführungsbeispiel können diese Untereinheiten oder Teile davon auch baulich voneinander getrennt, also nicht als gemeinsame Sende-/Empfangseinheit 46, ausgebildet sein. Außerdem ist auch eine rein analoge Auswertung, beispielsweise mittels einer fest verdrahteten elektronischen Schaltung möglich. Dann wäre kein Analog/Digital-Wandler vorhanden und die Auswerteeinheit 45 mittels Analogtechnik realisiert.

Die Sende-/Empfangseinheit 46 des in Figur 1 gezeigten Beispiels befindet sich auf Erdpotential, wo hingegen die Fahrdrähte 21 und 22 auf einem in der Bahn-Energieversorgung üblichem Potential, insbesondere von 15 bis 25 kV, liegen. Die Überbrückung dieser Potentialdifferenz erfolgt mittels des Lichtwellenleiters 47, über den auch das eingespeiste Lichtsignal LS und das von den FBG-Sensoren 41 herkommende Lichtsignal LS' übertragen werden. Dadurch ergibt sich ein besonders kompakter Aufbau. Der Lichtwellenleiter 47 besteht aus einem dielektrischen Material, wie beispielsweise Glas oder Kunststoff. Damit sind keine gesonderten Maßnahmen zur elektrischen Isolation erforderlich.

Die in der Sende-/Empfangseinheit 46 erzeugten Messwerte M1, M2,... werden beispielsweise mittels einer Funkübertragung zu einer in Figur 1 nicht dargestellten Datenerfassungseinheit übermittelt. Die Datenübertragung kann jedoch grundsätzlich auch leitungsgebunden elektrisch oder optisch erfolgen. Außerdem können die Sende-/Empfangseinheit 46 und die Datenerfassungseinheit auch als gemeinsame Einheit ausgebildet sein.

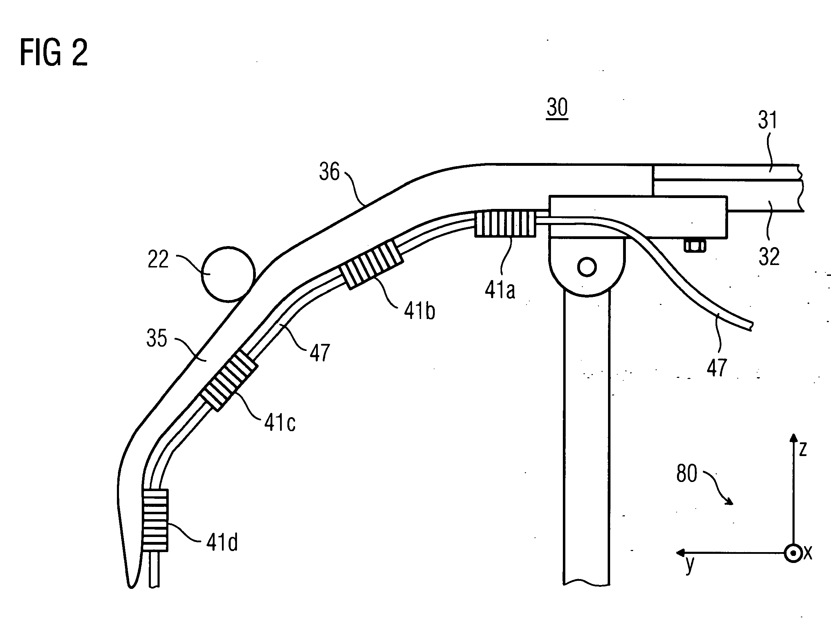

In Figur 2 ist der in Figur 1 mit II gekennzeichnete Ausschnitt vergrößert und detaillierter dargestellt. Das Endhorn 35, das eine für den Fahrdrahtkontakt vorgesehene Kontaktfläche 36 aufweist, ist beispielhaft mit vier FBG-Sensoren 41 versehen. Zur besseren Unterscheidbarkeit sind diese jeweils mit einem Buchstaben a, b, c bzw. d gekennzeichnet. Die FBG-Sensoren 41a, 41b, 41c und 41d sind insbesondere kraftschlüssig an der der Kontaktfläche 36 abgewandten Seite des Endhorns 35 angeordnete. Gemäß Figur 2 hat der Fahrdraht 22 zwischen den beiden einzelnen FBG-Sensoren 41b und 41c auf der Kontaktfläche 36 Kontakt mit dem Endhorn 35. Die vom Fahrdraht 22 auf das Endhorn 35 ausgehende Kontaktkraft weist im Wesentlichen in negative z- und y-Richtung. Dabei erfährt das Endhorn 35 zwischen Schleifelement 31 und Kontaktbereich eine Biegung. Die FBG-Sensoren 41a und 41b erfahren dadurch eine Verformung, die mit einer Änderung deren Schwerpunktswellenlänge behaftet ist, während sich die FBG-Sensoren 41c und 41d nicht verformen.

Mit der Auswertung des von den FBG-Sensoren 41a, 41b, 41c und 41d herkommenden Lichtsignal LS' lässt sich somit einerseits die Lage des Fahrdrahtes 22 auf dem Endhorn 35 bestimmen und andererseits aus dem Betrag der entsprechenden Schwerpunktswellenlängenänderung auf die Größe der Kontaktkraft schließen. Je nach Anforderungen an die Genauigkeit der Messungen ist es denkbar, die Anzahl der an das Endhorn 35 angebrachten FBG-Sensoren 41 zu erhöhen (= bessere Ortsauflösung) oder auch zu erniedrigen.

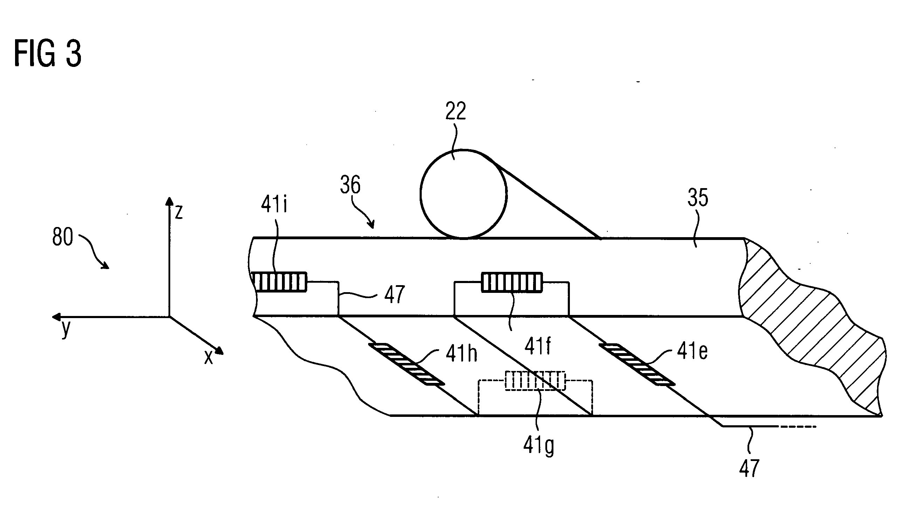

Die in Figur 2 dargestellte Verteilung der FBG-Sensoren 41 ist nur beispielhaft zu verstehen. Andere Sensor-Verteilungen sind ebenso möglich. FBG-Sensoren 41 haben eine Vorzugsrichtung, d.h. sie sind hauptsächlich auf eine Verformung in eine bestimmte Wirkungsrichtung empfindlich. Je nach Orientierung auf dem Endhorn 35 kann folglich eine andere Komponente der Endhornbiegung erfasst werden. In Figur 3 sind an den der Kontaktfläche 36 abgewandten Seiten des Endhorns 35 solch unterschiedlich orientierte FBG-Sensoren 41 angebracht. Zur besseren Unterscheidbarkeit sind diese jeweils mit einem Buchstaben e, f, g, h bzw. i gekennzeichnet. Beispielsweise weist die Wirkrichtung der FBG-Sensoren 41f, 41g und 41i in y-Richtung, während die Wirkrichtung der FBG-Sensoren 41e und 41h in x-Richtung weist. Somit lässt sich ein umfassenderes Bild über die auf das Endhorn 35 wirkenden Kräfte ermitteln. Erfasst werden können dann neben der Kontaktkraft beispielsweise auch Quer- und Reibungskräfte.

Das Ausführungsbeispiel in Figur 1 zeigt nur ein mit FBG-Sensoren 41 versehenes Endhorn 35. Die Kraftmesseinrichtung und das Verfahren gemäß der Erfindung lassen sich ohne weiteres auch auf beide die Enden der Schleifleiste 30 ausbildenden Endhörner 35 erweitern. Hierzu können alle an den beiden Endhörnern 35 angeordneten FBG-Sensoren 41 einem gemeinsamen Lichtwellenleiter 47 zugeordnet sein. Es ist aber auch möglich, die jeweils an einem Endhorn angeordneten FBG-Sensoren 41 jeweils einem Lichtwellenleiter 22 zuzuordnen. Beide Lichtwellenleiter 47 sind dann gemeinsam mit dem Koppler 43 zu verbinden.

## Patentansprüche

1. Kraftmesseinrichtung zur Bestimmung einer Kontaktkraft zwischen einem Stromabnehmerendhorn (35) eines Schienentriebfahrzeuges (5) und einem Fahrdraht (22) einer Oberleitung, wobei das Stromabnehmerendhorn (35) unter Einwirkung der Kontaktkraft biegbar ist, **dadurch gekennzeichnet, dass** die Einrichtung folgende Teile umfasst, nämlich
- mindestens einen am Stromabnehmerendhorn (35) angeordneten, als optischer Dehnungssensor ausgebildeten Faser-Bragg-Gitter-Sensor (41, 41a bis 41i), wobei der mindestens eine Faser-Bragg-Gitter-Sensor (41, 41a bis 41i) mit der kontaktkraftbedingten Biegung des Stromabnehmerendhorns (35) verformbar ist,
- Einspeisemittel (43, 44) zur Einspeisung eines Lichtsignals (LS) mit einem vorbestimmten Wellenlängengehalt in den mindestens einen eine Schwerpunktswellenlänge aufweisenden Faser-Bragg-Gitter-Sensor (41, 41a bis 41i),
wobei die Verformung des mindestens einen Faser-Bragg-Gitter-Sensors (41, 41a bis 41i) mit einer Änderung der Schwerpunktswellenlänge verbunden ist,
und
- Auswertemittel (45) zur Bestimmung eines Messwertes (M1, M2) für die Kontaktkraft aus einem vom mindestens einen Faser-Bragg-Gitter-Sensor (41, 41a bis 41i) herkommenden Lichtsignal (LS'), wobei mit der verformungsbedingten Änderung der Schwerpunktswellenlänge des Faser-Bragg-Gitter-Sensors (41, 41a bis 41i) eine Änderung des Wellenlängengehalts des vom mindestens einen Faser-Bragg-Gitter-Sensor (41, 41a bis 41i) herkommenden Lichtsignals (LS') verbunden ist.

2. Kraftmesseinrichtung nach Anspruch 1, **gekennzeichnet durch** weitere am Stromabnehmerendhorn (35) angeordnete, als optische Dehnungssensoren ausgebildete Faser-Bragg-Gitter-Sensoren (41, 41a bis 41i).

3. Kraftmesseinrichtung nach Anspruch 1 oder 2, **gekennzeichnet durch** zwei als optische Dehnungssensoren ausgebildete Faser-Bragg-Gitter-Sensoren (41, 41a bis 41i) mit voneinander verschiedener Wirkungsrichtung.

4. Verfahren zur Bestimmung einer Kontaktkraft zwischen einem Stromabnehmerendhorn (35) eines Schienentriebfahrzeuges (5) und einem Fahrdraht (22) einer Oberleitung, wobei das Stromabnehmerendhorn (35) unter Einwirkung der Kontaktkraft gebogen wird, **dadurch gekennzeichnet, dass** bei dem Verfahren
- mindestens ein als optischer Dehnungssensor ausgebildeter Faser-Bragg-Gitter-Sensor (41, 41a bis 41i) am Stromabnehmerendhorn (35) angeordnet wird, wobei der mindestens eine Faser-Bragg-Gitter-Sensor (41, 41a bis 41i) mit der kontaktkraftbedingten Biegung des Stromabnehmerendhorns (35) verformt wird,
- ein Lichtsignal (LS) mit einem vorbestimmten Wellenlängengehalt in den mindestens einen eine Schwerpunktswellenlänge aufweisenden Faser-Bragg-Gitter-Sensor (41, 41a bis 41i) eingespeist wird, wobei sich mit der Verformung des mindestens einen Faser-Bragg-Gitter-Sensors (41, 41a bis 41i) die Schwerpunktswellenlänge ändert,
und
- ein vom mindestens einen Faser-Bragg-Gitter-Sensor (41, 41a bis 41i) herkommendes Lichtsignal (LS') ausgewertet wird, wobei mit der verformungsbedingten Änderung der Schwerpunktswellenlänge des mindestens einen Faser-Bragg-Gitter-Sensors (41, 41a bis 41i) eine Änderung des Wellenlängengehalts des vom mindestens einen Faser-Bragg-Gitter-Sensor (41, 41a bis 41i) herkommenden Lichtsignals (LS') verbunden ist.

5. Verfahren nach Anspruch 4, **dadurch gekennzeichnet, dass** weitere als optische Dehnungssensoren ausgebildete Faser-Bragg-Gitter-Sensoren (41, 41a bis 41i) am Stromabnehmerendhorn (35) angeordnet werden.

6. Verfahren nach Anspruch 4 oder 5, **dadurch gekennzeichnet, dass** die Kontaktkraft in mindestens zwei voneinander verschiedene Wirkungsrichtungen erfasst wird.

## Claims

1. A force measuring device for determining a contact force between a current collector end horn (35) of a rail traction vehicle (5) and a contact wire (22) of an overhead contact line, it being possible to bend the current collector end horn (35) by the action of the contact force, **characterized in that** the device comprises the following parts, specifically
- at least one fiber Bragg grating sensor (41, 41a to 41i) which is arranged on the current collector end horn (35) and is designed as an optical strain gauge, it being possible to deform the at least one fiber Bragg grating sensor (41, 41a to 41i) with the bending, caused by the contact force, of the current collector end horn (35),
- injection means (43, 44) for injecting a light signal (LS) with a predetermined wavelength content into the at least one fiber Bragg grating sensor (41, 41a to 41i) having a centroid wavelength, the deformation of the at least one fiber Bragg grating sensor (41, 41a to 41i) being associated with a change in the centroid wavelength,
and
- evaluation means (45) for determining a measured value (M1, M2) for the contact force from a light signal (LS') originating from the at least one fiber Bragg grating sensor (41, 41a to 41i), a change in the wavelength content of the light signal (LS') originating from the at least one fiber Bragg grating sensor (41, 41a to 41i) being associated with the change, caused by deformation, in the centroid wavelength of the fiber Bragg grating sensor (41, 41a to 41i).

2. The force measuring device as claimed in claim 1, **characterized by** further fiber Bragg grating sensors (41, 41a to 41i) which are arranged on the current collector end horn (35) and are designed as optical strain gauges.

3. The force measuring device as claimed in claim 1 or 2, **characterized by** two fiber Bragg grating sensors (41, 41a to 41i) which are designed as optical strain gauges and have mutually differing directions of action.

4. A method for determining a contact force between a current collector end horn (35) of a rail traction vehicle (5) and a contact wire (22) of an overhead contact line, the current collector end horn (35) being bent by the action of the contact force, **characterized in that** in the method
- at least one fiber Bragg grating sensor (41, 41a to 41i) is arranged on the current collector end horn (35) and is designed as an optical strain gauge, the at least one fiber Bragg grating sensor (41, 41a to 41i) being deformed with the bending, caused by the contact force, of the current collector end horn (35),
- a light signal (LS) with a predetermined wavelength content is injected into the at least one fiber Bragg grating sensor (41, 41a to 41i) having a centroid wavelength, the centroid wavelength changing with the deformation of the at least one fiber Bragg grating sensor (41, 41a to 41i),
and
- a light signal (LS') originating from the at least one fiber Bragg grating sensor (41, 41a to 41i) is evaluated, a change in the wavelength content of the light signal (LS') originating from the at least one fiber Bragg grating sensor (41, 41a to 41i) being associated with the change, caused by deformation, in the centroid wavelength of the at least one fiber Bragg grating sensor (41, 41a to 41i).

5. The method as claimed in claim 4, **characterized in that** further fiber Bragg grating sensors (41, 41a to 41i) designed as optical strain gauges are arranged on the current collector end horn (35).

6. The method as claimed in claims 4 or 5, **characterized in that** the contact force in at least two mutually differing directions of action is detected.

## Revendications

1. Dispositif de mesure d'une force pour la détermination d'une force de contact entre une corne (35) d'extrémité d'archet d'un véhicule (5) ferroviaire de traction et un fil (22) de contact d'une ligne de contact, la corne (35) d'extrémité d'archet pouvant se courber sous l'effet de la force de contact, **caractérisé en ce que** le dispositif comprend les parties suivantes à savoir :
- au moins un capteur (41, 41a à 41i) à fibre et à réseau de Bragg disposé sur la corne (35) d'extrémité de l'archet et constitué en capteur optique de dilatation, le au moins un capteur (41, 41a à 41i) à fibre et à réseau de Bragg pouvant être déformé par la flexion de la corne (35) d'extrémité de l'archet due à la force de contact,
- un moyen (43, 44) d'alimentation pour envoyer un signal (LS) lumineux, ayant une composition en longueur d'onde déterminée à l'avance, dans le au moins un capteur (41, 41a à 41i) à fibre et à réseau de Bragg ayant un centre de gravité spectrale, la déformation du au moins un capteur (41, 41a à 41i) à fibre et à réseau de Bragg étant reliée à une variation du centre de gravité spectral et,
- un moyen (45) d'exploitation pour la détermination d'une valeur (M1, M2) de mesure de la force de contact à partir d'un signal (LS') lumineux provenant du au moins un capteur (41, 41a à 41i) à fibre et à réseau de Bragg, une variation de la composition en longueur d'onde du signal (LS') lumineux provenant du au moins un capteur (41, 41a à 41i) à fibre et à réseau de Bragg étant reliée à la variation due à la déformation du centre de gravité spectral du capteur (41, 41a à 41i) à fibre et à réseau de Bragg.

2. Dispositif de mesure de force suivant la revendication 1,
**caractérisé par** d'autres capteurs (41, 41a à 41i) à fibre et à réseau de Bragg disposés sur la corne (35) d'extrémité de l'archet et constitués sous la forme de capteurs de dilatation.

3. Dispositif de mesure de force suivant la revendication 1 ou 2,
**caractérisé par** deux capteurs (41, 41a à 41i) à fibre et à réseau de Bragg constitués sous la forme de capteurs optiques de dilatation et ayant des sens d'action différents l'un de l'autre.

4. Procédé de détermination d'une force de contact entre une corne (35) d'extrémité d'un archet d'un véhicule (5) ferroviaire de traction et un fil (22) de contact d'une ligne de contact, l'extrémité de l'archet étant courbé sous l'action de la force de contact, **caractérisé en ce que** dans le procécé :
- on met au moins un capteur (41, 41a à 41i) à fibre et à réseau de Bragg, constitué en capteur optique de dilatation, sur la corne (35) d'extrémité de l'archet, le au moins un capteur (41, 41a à 41i) à fibre et à réseau de Bragg étant déformé par la flexion de la corne (35) d'extrémité de l'archet due à la force de contact,
- on envoie un signal (LS) lumineux ayant une composition en longueur d'onde déterminée à l'avance dans le au moins un capteur (41, 41a à 41i) à fibre et à réseau de Bragg ayant au moins un centre de gravité spectral, le centre de gravité spectral se modifiant avec la déformation du au moins un capteur (41, 41a à 41i) à fibre et à réseau de Bragg et ,
- on exploite un signal (LS') lumineux provenant du au moins un capteur (41, 41a à 41i) à fibre et à réseau de Bragg, une variation du centre de gravité spectral du signal (LS') lumineux provenant du capteur (41, 41a à 41i) à fibre et à réseau de Bragg étant reliée à une variation, due à la déformation, du centre de gravité spectral du au moins un capteur (41,41a à 41i) à fibre et à réseau de Bragg.

5. Procédé de détermination d'une force de contact suivant la revendication 4,
**caractérisé en ce que** l'on met d'autres capteurs (41, 41a à 41i) à fibre et à réseau de Bragg, constitués en capteurs optiques de dilatation, sur la corne (35) d'extrémité de l'archet.

6. Procédé de détermination d'une force de contact suivant la revendication 4 ou 5,
**caractérisé en ce que** l'on relève la force de contact dans au moins deux directions d'action différentes l'une de l'autre.
